# EUROPEAN PATENT APPLICATION

(11) **EP 4 793 036 A1**
(43) Date of publication of application: **19.08.2026**
(21) Application number: 24882431.0
(22) Date of filing: 24.10.2024
(51) Int. Cl.: B32B 7/06, B01D 53/22, B01D 69/10, B01D 69/12, B32B 27/30, C08F 220/06

(54) **METHOD FOR MANUFACTURING MULTILAYER BODY AND CO2 SEPARATION METHOD**

(30) Priority: 26.10.2023 JP 2023184200
(71) Applicant: TOKYO OHKA KOGYO CO., LTD., Kawasaki-shi, Kanagawa 211 0012 (JP)
(72) Inventor: SENZAKI, Takahiro, Kawasaki-shi, Kanagawa 211-0012 (JP); NOGUCHI, Takuya, Kawasaki-shi, Kanagawa 211-0012 (JP); SUGAWARA, Tsukasa, Kawasaki-shi, Kanagawa 211-0012 (JP)
(74) Representative: Plasseraud IP
(86) International application number: PCT/JP2024/037860
(87) International publication number: WO 2025/089320

(57) **Abstract**

The present invention provides a method for manufacturing a laminate, wherein when a laminate, in which a film and a support base material are stacked upon each other, is manufactured by forming a sacrificial layer on a support body, forming a film such as a CO₂ separation film on the sacrificial layer, bonding the support base material on the film, and then removing the support body and the sacrificial layer, the sacrificial layer can be easily removed with a liquid such as water. The present invention specifically provides a method for manufacturing a laminate, the method including: a step for forming a sacrificial layer on a support body using a sacrificial layer forming composition; a step for forming a film on the sacrificial layer; a step for bonding a support base material on the film; a step for separating the support body after the bonding step; and a step for removing the sacrificial layer by dissolving the sacrificial layer into a liquid after the separation step. In this method for manufacturing a laminate, there is used a sacrificial layer forming composition which includes a resin, a polyol, and a solvent, wherein the resin has a functional group I which is one or more groups selected from the group consisting of a hydroxyl group, a cyano group, and a carboxyl group, and a functional group II which is a hydrophilic group or a hydrophobic group other than the functional group I.

## Description

### TECHNICAL FIELD

The present invention relates to a method for producing a laminate and a method for separating CO₂.

### BACKGROUND ART

In order to suppress global warming due to climate changes, etc., a technique of separating and recovering carbon dioxide (CO₂) using a CO₂ separation membrane has been developed (for example, Patent Document 1).

### Citation List

### Patent Documents

Patent Document 1: Japanese Unexamined Patent Application Publication No. 2018-15678

### DISCLOSURE OF THE INVENTION

### Problems to be Solved by the Invention

In the case where the CO₂ separation membrane is, for example, thin or large, the CO₂ separation membrane is difficult to stand by itself and is likely to deform or break. For this reason, a laminate in which a support base material is bonded to a CO₂ separation membrane to support (reinforce) the CO₂ separation membrane is used for CO₂ separation in some cases. Such a laminate can be manufactured by, for example, forming a sacrificial layer on a support, forming a CO₂ separation membrane on the sacrificial layer, bonding a support base material onto the CO₂ separation membrane, and then removing the support and the sacrificial layer. In such a production method, when removing the sacrificial layer containing resin by dissolving it in a liquid, there is a problem where at least a part of the sacrificial layer tends to remain without being completely dissolved. If the sacrificial layer remains, it becomes difficult to separate CO₂. In order to remove the remaining sacrificial layer, it is necessary to further dissolve the sacrificial layer using, for example, an aqueous alkali solution (basic aqueous solution). Therefore, it is desired that sacrificial layers can be easily removed using only a liquid such as water without using an alkali or the like. Similarly, in membranes other than CO₂ separation membranes, laminates in which a membrane and a support base material are laminated are used in some cases. Therefore, when producing a laminate in which a membrane and a support base material are laminated, it is also desired that a sacrificial layer can be easily removed with a liquid such as water.

The present invention has been made in view of the above problems, and an object of the present invention is to provide a method for producing a laminate where at least one membrane and a support base material are laminated, in which when producing the laminate by forming a sacrificial layer on a support, forming a membrane such as a CO₂ separation membrane on the sacrificial layer, bonding a support base material onto the membrane, and then removing the support and the sacrificial layer, the sacrificial layer can be easily removed with a liquid such as water; and to provide a CO₂ separation method using the laminate produced by the above-mentioned method.

### Means for Solving the Problems

The present inventors have found that the problem can be solved by using a specific sacrificial layer-forming composition in the method for producing a laminate, including a sacrificial layer forming step of forming a sacrificial layer on a support by using a sacrificial layer-forming composition, a membrane forming step of forming at least one membrane on the sacrificial layer, a bonding step of bonding a support base material onto the at least one membrane, a peeling step of peeling the support after the bonding step, and a sacrificial layer removal step of removing the sacrificial layer by dissolving the sacrificial layer in a liquid after the peeling step, having completed the present invention. The sacrificial layer-forming composition includes a resin (A), a polyol (B), and a solvent (C) and has a functional group I which is one or more groups selected from the group consisting of a hydroxy group, a cyano group, and a carboxy group, and a functional group II which is a hydrophilic or hydrophobic group other than the functional group I, provided that when the functional group II includes one or more groups selected from a hydroxy group, a cyano group, or a carboxy group, the resin (A) may not have the functional group I. Specifically, the present invention provides the following.
[1] A method for producing a laminate in which at least one membrane and a support base material are laminated, the method including:
   a sacrificial layer forming step of forming a sacrificial layer on a support using a sacrificial layer-forming composition;
   a membrane forming step of forming at least one membrane on the sacrificial layer;
   a bonding step of bonding a support base material on the at least one membrane;
   a peeling step of peeling the support after the bonding step; and
   a sacrificial layer removal step of removing the sacrificial layer by dissolving the sacrificial layer in a liquid after the peeling step,
   in which the sacrificial layer-forming composition includes a resin (A), a polyol (B), and a solvent (C), and
   the resin (A) has a functional group I which is one or more groups selected from the group consisting of a hydroxy group, a cyano group, and a carboxy group, and a functional group II which is a hydrophilic or hydrophobic group other than the functional group I,
   provided that when the functional group II contains one or more groups selected from a hydroxy group, a cyano group, or a carboxy group, the resin (A) may not have the functional group I.
[2] The method for producing a laminate as described in [1], in which the functional group II is a hydrophilic group and is a group represented by the following formula (A1):

   -NH-R¹ (A1):

   wherein R¹ represents an alkyl group having 1 or more and 4 or less carbon atoms substituted with one or more groups selected from the group consisting of an amino group, a sulfonic acid group, and a hydroxy group, or a hydrogen atom, or
   a quaternary ammonium base represented by the following formula (A2):

      -N⁺R²R³R⁴·Z⁻ (A2):
   wherein R², R³, and R⁴ each independently represent a hydrogen atom or a hydrocarbon group having 1 to 6 carbon atoms, and Z⁻represents a counter anion.
[3] The method for producing a laminate as described in [1] or [2], in which the resin (A) is a water-soluble resin having a constituent unit derived from at least one monomer selected from the group consisting of (meth)acrylamide and a (meth)acrylamide derivative.
[4] The method for producing a laminate as described in any one of [1] to [3], in which the functional group I is a group derived from a monomer represented by the following formula (A3):

   CH₂=CR⁵-(R⁶)ₐ-CO-R⁷ (A3):

   wherein R⁵ is a hydrogen atom or a methyl group, R⁶ is a divalent hydrocarbon group, a is 0 or 1, R⁷ is -OH, -O-R⁸, or - NH-R⁸, and R⁸ is a hydrocarbon group substituted with one or more functional groups selected from the group consisting of a hydroxy group, a cyano group, and a carboxy group.
[5] The method for producing a laminate as described in any one of [1] to [4], in which the liquid is water.
[6] The method for producing a laminate as described in any one of [1] to [5], in which the sacrificial layer has a film thickness of 1 µm or more and 20 µm or less.
[7] The method for producing a laminate as described in any one of [1] to [6], in which the at least one membrane has a film thickness of 100 nm or more and 1,000 nm or less.
[8] The method for producing a laminate as described in any one of [1] to [7], in which the method does not include a step of dissolving the sacrificial layer in an aqueous alkali solution.
[9] The method for producing a laminate as described in any one of [1] to [8], in which the at least one membrane is a CO₂ separation membrane.
[10] A CO₂ separation method including: a laminate production step of producing a laminate by the method for producing a laminate as described in [9] above; and a separation step of separating CO₂ from a gas containing CO₂ by supplying the gas to the laminate.

### Effects of the Invention

According to the present invention, it is possible to provide a method for producing a laminate in which at least one membrane and a support base material are laminated, the method including forming a sacrificial layer on a support, forming a membrane such as a CO₂ separation membrane on the sacrificial layer, bonding a support base material on the membrane, and then removing the sacrificial layer and the support, in which the sacrificial layer can be easily removed with a liquid such as water; and to provide a CO₂ separation method using the laminate produced by the above-mentioned method.

### BRIEF DESCRIPTION OF THE DRAWINGS

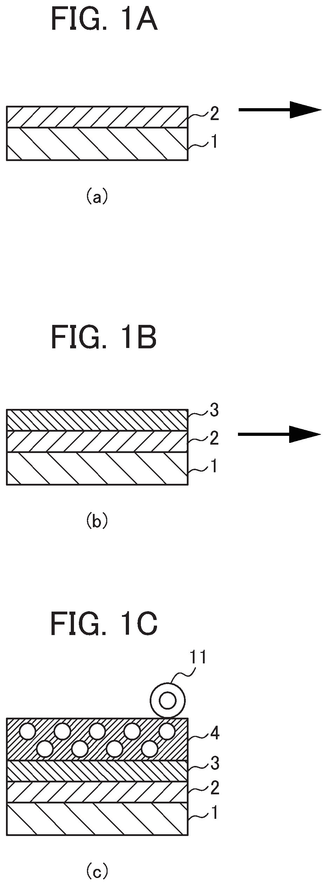

FIGs. 1A to 1F are schematic views illustrating a method for producing a laminate.

### PREFERRED MODE FOR CARRYING OUT THE INVENTION

### <<Method for producing Laminate>>

A method for producing a laminate is a method for producing a laminate in which at least one membrane and a support base material are laminated. The method for producing a laminate includes:
a sacrificial layer forming step of forming a sacrificial layer on a support using a sacrificial layer-forming composition;
a membrane forming step of forming at least one membrane on the sacrificial layer;
a bonding step of bonding a support base material on the at least one membrane;
a peeling step of peeling the support after the bonding step; and
a sacrificial layer removal step of removing, after the peeling step, the sacrificial layer by dissolving the sacrificial layer in a liquid. The sacrificial layer-forming composition includes a resin (A), a polyol (B), and a solvent (C). The resin (A) has a functional group I which is one or more groups selected from the group consisting of a hydroxy group, a cyano group, and a carboxy group, and a functional group II which is a hydrophilic or hydrophobic group other than the functional group I. However, when the functional group II contains one or more groups selected from a hydroxy group, a cyano group, and a carboxy group, the resin (A) may not have the functional group I. Each step will be described below with reference to FIGs. 1A to 1F. FIGs. 1A to 1F are schematic views illustrating the method for producing a laminate.

### [Sacrificial layer Forming Step]

In the sacrificial layer forming step, a sacrificial layer 2 is formed on a support 1, using a sacrificial layer-forming composition (FIG. 1A). The sacrificial layer-forming composition includes a resin (A), a polyol (B), and a solvent (C). The resin (A) has a functional group I which is one or more groups selected from the group consisting of a hydroxy group, a cyano group, and a carboxy group, and a functional group II which is a hydrophilic or hydrophobic group other than the functional group I. It should be noted that when the functional group II contains one or more groups selected from a hydroxy group, a cyano group, and a carboxy group, the resin (A) may not have the functional group I.

The resin (A) and the polyol (B) contained in the sacrificial layer-forming composition are easily dissolved in a liquid such as water at room temperature (for example, 25°C). Therefore, in the subsequent sacrificial layer removal step, the sacrificial layer can be easily removed with a liquid such as water. Since the sacrificial layer-forming composition contains the resin (A) and the polyol (B), it is also possible to form a sacrificial layer having self-supporting toughness, flexibility, and excellent handling properties. Further, mixing between the sacrificial layer and the membrane in the membrane forming step, etc. also can be suppressed, because the resin (A) is difficult to dissolve in the polymer or solvent of the membrane-forming composition used in the membrane forming step, which is described below.

Hereinafter, essential or optional components included in the sacrificial layer-forming composition will be described.

### <Resin (A)>

The resin (A) has a functional group I which is one or more groups selected from the group consisting of a hydroxy group, a cyano group, and a carboxy group.

The resin (A) has a functional group II which is a hydrophilic or hydrophobic group other than the functional group I. The hydrophilic or hydrophobic group is not particularly limited as long as it is a functional group conventionally recognized as a hydrophilic or hydrophobic group by those skilled in the art and can be appropriately selected from them.

The type of the resin (A) is not particularly limited as long as the resin (A) has a predetermined functional group and is soluble in the solvent (C). Examples of the resin (A) include a (meth)acrylic resin, a novolac resin, a polyester resin, a polyamide resin, a polyimide resin, a polyamideimide resin, and a silicone resin. Among these resins, a (meth)acrylic resin is preferable because introduction of a functional group and adjustment of the content ratio of a unit having the functional group are easy. In the present specification, "(meth)acrylic" means both "acrylic" and "methacrylic".

Examples of the hydrophilic group include polyoxyalkylene groups (e.g., a polyoxyethylene group, a polyoxypropylene group, and a polyoxyalkylene group containing oxyethylene groups and oxypropylene groups bonded in a block or random manner), an amino group, a carboxy group, a hydroxy group, and a sulfonic acid group. In addition, organic groups containing these groups are also preferable as the hydrophilic group.

When the resin (A) has a hydrophilic or hydrophobic group including a hydroxy group, a cyano group, and a carboxy group as the functional group II, the hydroxy group, the cyano group, or the carboxy group included in the hydrophilic or hydrophobic group also plays a role as the functional group I. Therefore, when the resin (A) has a hydrophilic or hydrophobic group including a hydroxy group, a cyano group, and a carboxy group as the functional group II, the resin (A) may not have the functional group I. It should be noted that the hydrophilic group that includes a hydroxy group and a carboxy group encompasses a hydroxy group itself and a carboxy group itself.

From the viewpoint of excellent solubility of the sacrificial layer in water, groups represented by the following formula (A1):

-NH-R¹ (A1):

wherein R¹ represents an alkyl group having 1 or more and 4 or less carbon atoms substituted with one or more groups selected from the group consisting of an amino group, a sulfonic acid group, and a hydroxy group, or represents a hydrogen atom, are preferred as the hydrophilic group.

Examples of R¹ of the hydrophilic group represented by the formula (A1) include groups represented by the following formulae.

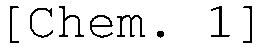

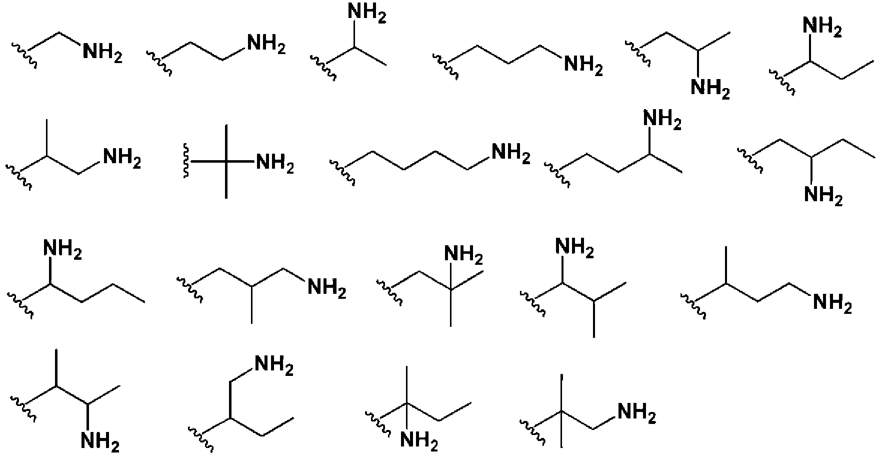

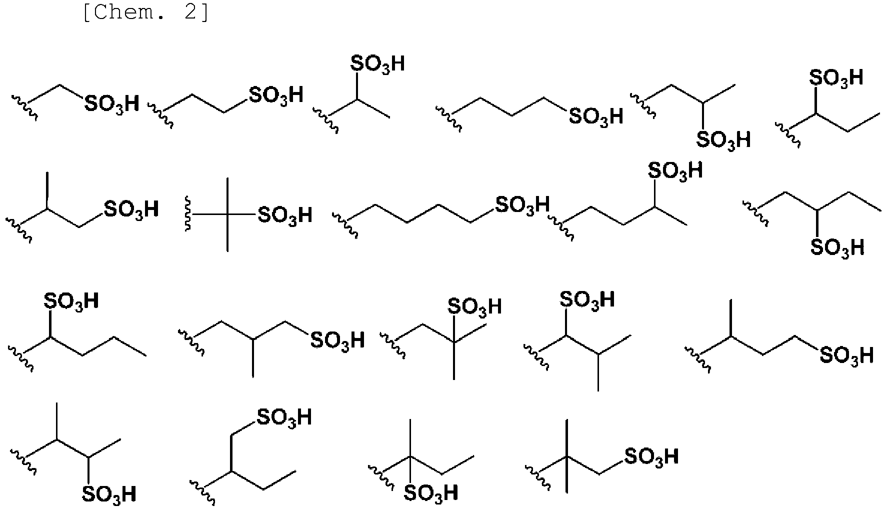

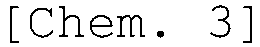

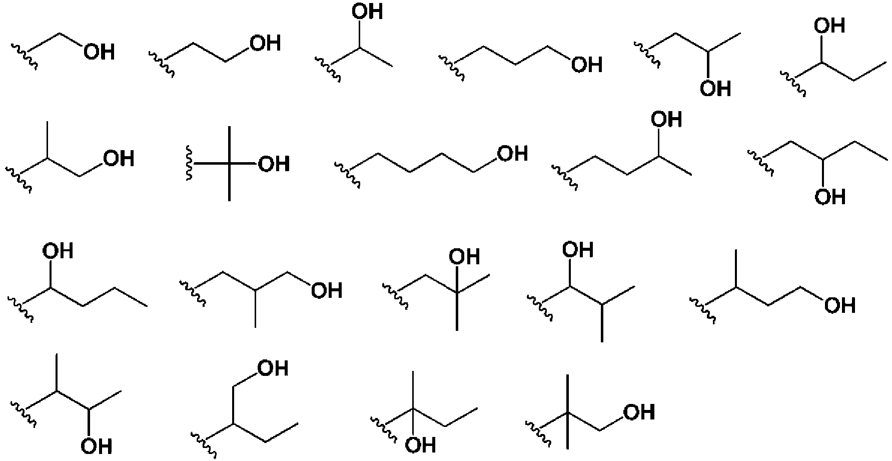

As the hydrophilic group, quaternary ammonium bases represented by the following formula (A2):

-N⁺R²R³R⁴·Z⁻ (A2)

wherein R², R³, and R⁴ each independently represent a hydrogen atom or a hydrocarbon group having 1 to 6 carbon atoms and Z⁻represents a counter anion,
are also preferred from the viewpoint of excellent solubility in water.

Preferable examples of the hydrocarbon group having 1 or more and 6 or less carbon atoms include a methyl group, an ethyl group, an n-propyl group, an isopropyl group, an n-butyl group, an n-pentyl group, an n-hexyl group, and a phenyl group. A counter anion as Z⁻ is not particularly limited as long as it is a monovalent anion but a halide ion is preferable. Suitable examples of the halide ion include a chloride ion, a bromide ion, and an iodide ion.

Examples of the hydrophilic group represented by the formula (A2) include groups represented by the following formulae.

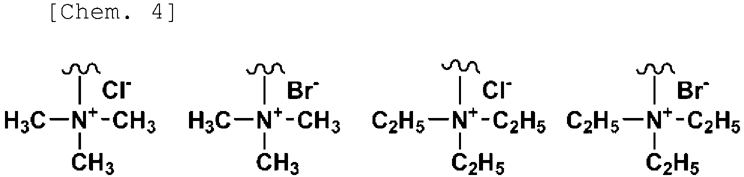

Examples of the hydrophobic group include fluorinated hydrocarbon groups, silyl groups, siloxane groups, alkyl groups having 6 to 20 carbon atoms, and aromatic hydrocarbon groups having 10 or more and 20 or less carbon atoms. As the fluorinated hydrocarbon groups, groups described below for a formula (A4) are preferable. Preferable examples of the silyl groups include groups represented by a formula (A5) described below, in which n is 0. Examples of the silyl groups include a trimethylsilyl group, a triethylsilyl group, a tripropylsilyl group, a triisopropylsilyl group, a tert-butyldimethylsilyl group, and a triphenylsilyl group. Preferable examples of the siloxane groups include groups represented by the formula (A5) described below, in which n is 1 or more.

As the resin (A), a polymer of a monomer having an unsaturated bond is preferable because various functional groups can be easily introduced and an amount of each functional group can be easily adjusted. Such polymers may be homopolymers or copolymers.

In this case, the functional group I of the resin (A) is preferably a group derived from a monomer represented by the following formula (A3):

CH₂=CR⁵-(R⁶)ₐ-CO-R⁷ (A3)

wherein R⁵ is a hydrogen atom or a methyl group, R⁶ is a divalent hydrocarbon group, a is 0 or 1, R⁷ is -OH, -O-R⁸, or - NH-R⁸, and R⁸ is a hydrocarbon group substituted with one or more functional groups selected from the group consisting of a hydroxy group, a cyano group, and a carboxy group.

In the formula (A3), R⁶ represents a divalent hydrocarbon group. The number of carbon atoms of the divalent hydrocarbon group is not particularly limited as long as the object of the present invention is not impaired. From the viewpoint of easy availability and preparation of the resin (A), the number of carbon atoms of the divalent hydrocarbon group as R⁶ is preferably 1 or more and 20 or less, more preferably 1 or more and 12 or less, particularly preferably 1 or more and 10 or less, and most preferably 1 or more and 6 or less.

The divalent hydrocarbon group as R⁶ may be an aliphatic group, an aromatic group, or a hydrocarbon group including an aliphatic portion and an aromatic portion. When the divalent hydrocarbon group is an aliphatic group, the aliphatic group may be a saturated aliphatic group or an unsaturated aliphatic group. The structure of the aliphatic group may be linear, branched, cyclic, or a combination of these structures.

Preferred examples of R⁶ include a methylene group, an ethane-1,2-diyl group, an ethane-1,1-diyl group, a propane-1,3-diyl group, a propane-1,1-diyl group, a propane-2,2-diyl group, an n-butane-1,4-diyl group, an n-pentane-1,5-diyl group, an n-hexane-1,6-diyl group, an n-heptane-1,7-diyl group, an n-octane-1,8-diyl group, an n-nonane-1,9-diyl group, an n-decane-1,10-diyl group, an o-phenylene group, an m-phenylene group, a p-phenylene group, a naphthalene-2,6-diyl group, a naphthalene-2,7-diyl group, a naphthalene-1,4-diyl group, and a biphenyl-4,4'-diyl group.

R⁷ is -OH, -O-R⁸, or -NH-R⁸, and R⁸ is a hydrocarbon group substituted with one or more functional groups selected from the group consisting of a hydroxy group, a cyano group, and a carboxy group. The hydrocarbon group that constitutes the main skeleton of the group of R⁸ may be a linear, branched, or cyclic aliphatic group, or may be an aromatic hydrocarbon group. The number of carbon atoms of the linear, branched, or cyclic aliphatic group is preferably 1 or more and 20 or less, and more preferably 1 or more and 12 or less. Suitable examples of the linear or branched aliphatic group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a sec-pentyl group, a tert-pentyl group, an n-hexyl group, an n-heptyl group, an n-octyl group, an n-nonyl group, and an n-decyl group. Suitable examples of the cyclic aliphatic group include cycloalkyl groups such as a cyclopropyl group, a cyclobutyl group, a cyclopentyl group, a cyclohexyl group, a cycloheptyl group, and a cyclooctyl group; groups formed by removing one hydrogen atom from a polycycloalkane such as adamantane, norbornane, isobornane, tricyclodecane, and tetracyclododecane; and groups formed by removing one hydrogen atom from a product of these polycycloalkanes substituted with an alkyl group having 1 or more and 4 or less carbon atoms. Suitable examples of the aromatic hydrocarbon group include a phenyl group, a naphthyl group, an anthranyl group, a phenanthrenyl group, and a biphenylyl group. The aromatic hydrocarbon group may be substituted with an alkyl group having 1 or more and 4 or less carbon atoms, such as a methyl group or an ethyl group.

Particularly preferable examples of the unit derived from the monomer represented by the formula (A3) include the following units a3-1 to a3-9. Among the following units a3-1 to a3-9, units a3-1 to a3-4 are more preferable.

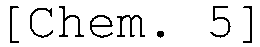

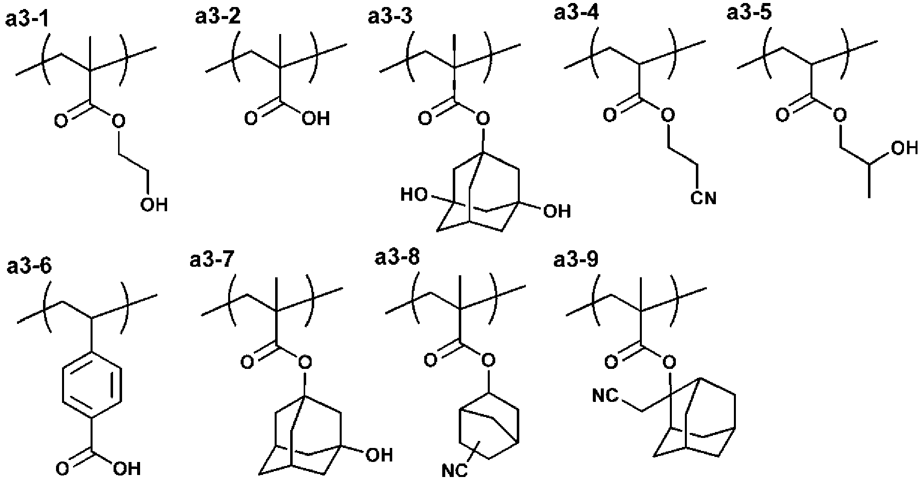

When the resin (A) has a hydrophobic group as the functional group II, the functional group II is preferably derived from a monomer represented by the following formula (A4):

CH₂=CR⁹-(CO-O)_{b}-R¹⁰ (A4):

wherein R⁹ is a hydrogen atom or a methyl group, b is 0 or 1, and R¹⁰ is a fluorinated hydrocarbon group or a group represented by the following formula (A5):

   -SiR¹¹R¹²-(-O-SiR¹¹R¹²-)ₙ-R¹³ (A5):
wherein R¹¹, R¹², and R¹³ are each independently a hydrocarbon group having 1 or more and 6 or less carbon atoms, and n is an integer of 0 or more.

In the formula (A4), when R¹⁰ is a fluorinated hydrocarbon group, the hydrocarbon group that constitutes the main skeleton of the fluorinated hydrocarbon group is the same as the hydrocarbon group that constitutes the main skeleton of the group of R⁸. The fluorinated hydrocarbon group may be a group in which all of the hydrogen atoms of the hydrocarbon group have been substituted with fluorine atoms. Examples of the fluorinated hydrocarbon group as R¹⁰ include fluorinated chain alkyl groups such as -CF₃, -CF₂CF₃, -(CF₂)₂CF₃, -(CF₂)₃CF₃, -(CF₂)₄CF₃, -(CF₂)₅CF₃, -(CF₂)₆CF₃, -(CF₂)₇CF₃, -(CF₂)₈CF₃, - (CF₂)₉CF₃, -CH₂CF₃, -CH₂CF₂CF₃, -CH₂(CF₂)₂CF₃, -CH₂(CF₂)₃CF₃, - CH₂(CF₂)₄CF₃, -CH₂(CF₂)₅CF₃, -CH₂(CF₂)₆CF₃, -CH₂(CF₂)₇CF₃, - CH₂(CF₂)₈CF₃, -CH₂CH₂CF₃, -CH₂CH₂CF₂CF₃, -CH₂CH₂(CF₂)₂CF₃, - CH₂CH₂(CF₂)₃CF₃, -CH₂CH₂(CF₂)₄CF₃, -CH₂CH₂(CF₂)₅CF₃, - CH₂CH₂(CF₂)₆CF₃, -CH₂CH₂(CF₂)₇CF₃, and -CH(CF₃)₂; fluorinated aromatic hydrocarbon groups such as a pentafluorophenyl group, an o-trifluoromethylphenyl group, an m-trifluoromethylphenyl group and a p-trifluoromethylphenyl group; and fluorinated alicyclic groups such as an octafluoroadamantyl group.

In the formula (A4), when R¹⁰ is a group represented by the formula (A5), R¹¹, R¹², and R¹³ are preferably each independently a methyl group, an ethyl group, or a phenyl group, and all of R¹¹, R¹², and R¹³ are more preferably methyl groups. In the formula (A5), the upper limit of n is not particularly limited as long as the object of the present invention is not impaired. n is preferably an integer of 0 or more and 35 or less, and more preferably an integer of 0 or more and 10 or less.

Particularly preferable examples of the unit having a hydrophobic group and derived from the monomer represented by the formula (A4) include the following units a4-1 to a4-22. Among the following units, units of a4-8, a4-18, a4-19, and a4-22 are more preferable.

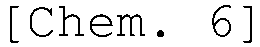

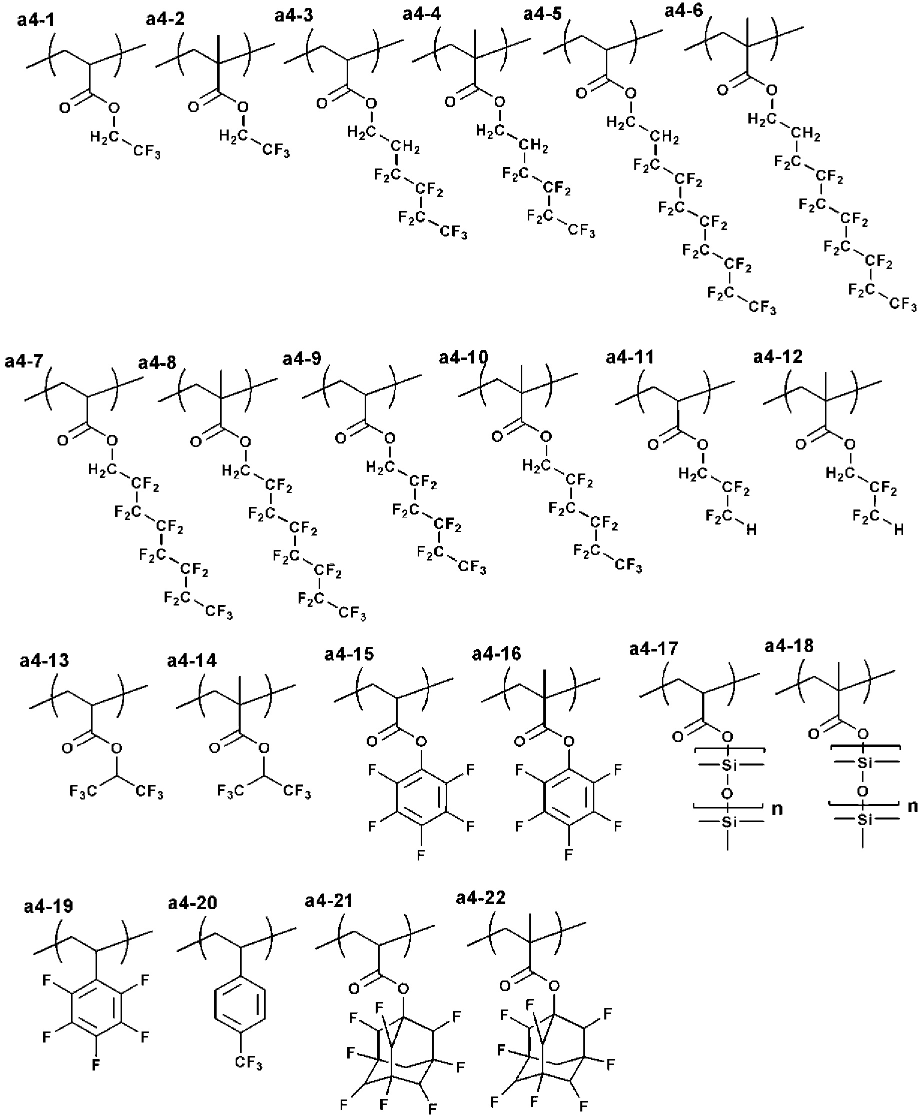

When the resin (A) has a hydrophilic group as the functional group II, the resin (A) is preferably a water-soluble resin having a constituent unit derived from at least one monomer selected from the group consisting of (meth)acrylamide and (meth)acrylamide derivatives. Specifically, when the resin (A) has a hydrophilic group as the functional group II, the functional group II is preferably derived from at least one monomer selected from the group consisting of (meth)acrylamide and (meth)acrylamide derivatives.

For example, when the resin (A) has a hydrophilic group as the functional group II, the functional group II is preferably derived from a monomer represented by the following formula (A6):

CH₂=CR¹⁴-CO-NH-R¹ (A6):

wherein R¹ represents an alkyl group having 1 or more and 4 or less carbon atoms substituted with one or more groups selected from the group consisting of an amino group, a sulfonic acid group, and a hydroxy group, or a hydrogen atom, and R¹⁴ represents a hydrogen atom or a methyl group.

In the formula (A6), R¹ is as described above.

Particularly preferable examples of the unit having a hydrophilic group and derived from the monomer represented by the formula (A6) include the following units a6-1 to a6-5. Among the following units, units a6-1 to a6-4 are more preferable.

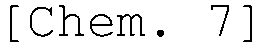

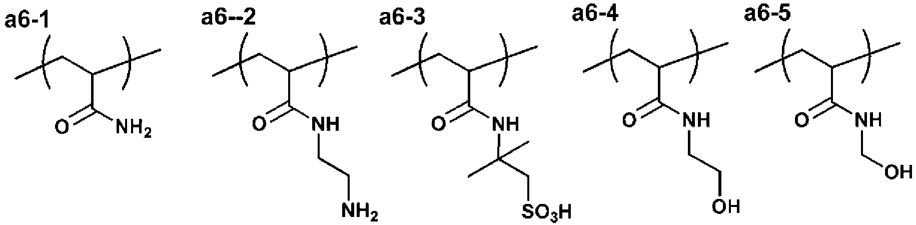

When the resin (A) has a hydrophilic group as the functional group II, the functional group II is preferably a hydrophilic group derived from a monomer represented by the following formula (A7):

CH₂=CR¹⁵-CO-NH-R¹⁶-N⁺R²R³R⁴ · Z⁻ (A7) :

wherein R², R³, and R⁴ each independently represent a hydrogen atom or a hydrocarbon group having 1 or more and 6 or less carbon atoms, Z⁻ represents a counter anion, R¹⁵ represents a hydrogen atom or a methyl group, and R¹⁶ represents a single bond or a hydrocarbon group having 1 or more and 6 or less carbon atoms.

In the formula (A7), R², R³, R⁴, and Z⁻ are as described above. In the formula (A7), examples of the hydrocarbon group having 1 or more and 6 or less carbon atoms as R¹⁶ include a methylene group, an ethane-1,2-diyl group, an ethane-1,1-diyl group, a propane-1,3-diyl group, a propane-1,1-diyl group, a propane-2,2-diyl group, an n-butane-1,4-diyl group, an n-pentane-1,5-diyl group, and an n-hexane-1,6-diyl group.

Particularly preferable examples of the unit having a hydrophilic group and derived from the monomer represented by the formula (A7) include the following constituent units a7-1 to a7-10.

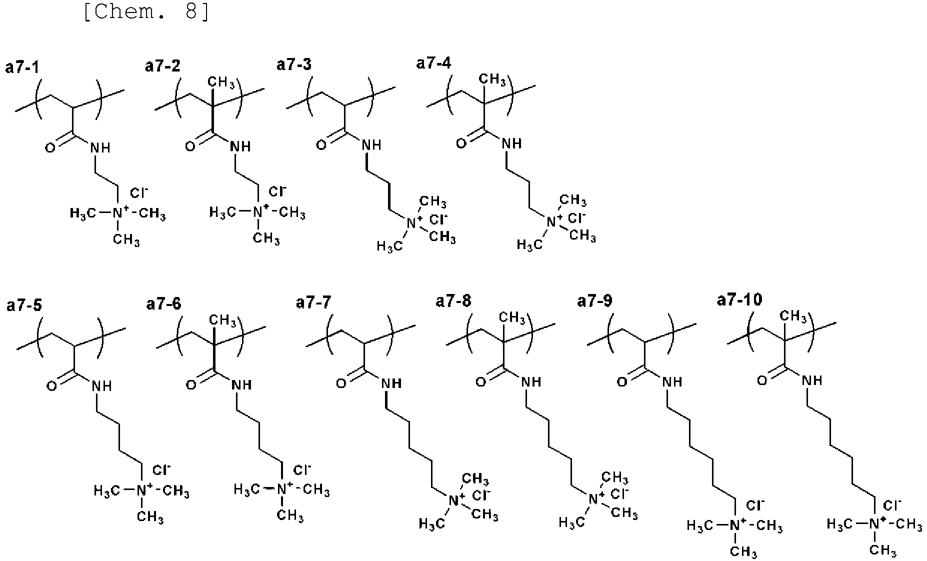

When the resin (A) is a polymer of a monomer having an unsaturated bond, the polymer may contain a constituent unit other than the unit derived from the monomer represented by the formula (A3), the unit derived from the monomer represented by the formula (A4), the unit derived from the monomer represented by the formula (A6), and the unit derived from the monomer represented by the formula (A7) as long as the object of the present invention is not impaired.

Examples of the other constituent unit include those derived from monomers such as methyl (meth)acrylate, ethyl (meth)acrylate, isopropyl (meth)acrylate, n-propyl (meth)acrylate, n-butyl (meth)acrylate, isobutyl (meth)acrylate, tert-butyl (meth)acrylate, n-pentyl (meth)acrylate, isopentyl (meth)acrylate, phenyl (meth)acrylate, methoxyethyl (meth)acrylate, (meth)acryloylmorpholine, pyridine (meth)acrylic acid, imidazole (meth)acrylic acid, vinylimidazole, vinylpyridine, N-methyl (meth)acrylamide, N-ethyl (meth)acrylamide, N-n-propyl (meth)acrylamide, N-isopropyl (meth)acrylamide, N-n-butyl (meth)acrylamide, N-n-pentyl (meth)acrylamide, N-isopentyl (meth)acrylamide, N-phenyl (meth)acrylamide, N,N-dimethyl(meth)acrylamide, N,N-diethyl(meth)acrylamide, N,N-din-propyl(meth)acrylamide, N,N-di-n-butyl(meth)acrylamide, N,N-di-n-pentyl(meth)acrylamide, styrene, α-methylstyrene, β-methylstyrene, o-methylstyrene, m-methylstyrene, p-methylstyrene, and chlorostyrene.

When the resin (A) is a polymer of a monomer having an unsaturated bond, the molar ratio of the constituent unit derived from the monomer represented by the formula (A3) to all the constituent units contained in such a polymer is preferably 0.1 mol% or more and 50 mol% or less, more preferably 1 mol% or more and 20 mol% or less, and particularly preferably 1 mol% or more and 15 mol% or less.

When the resin (A) is a polymer of a monomer having an unsaturated bond, the molar ratio of the constituent unit derived from the monomer represented by the formula (A4), (A6), or (A7) to all the constituent units contained in such a polymer is preferably 50 mol% or more and 99.9 mol% or less, more preferably 60 mol% or more and 99 mol% or less, and particularly preferably 70 mol% or more and 99 mol% or less. However, when the constituent unit derived from the monomer represented by the formula (A4), (A6), or (A7) contains any one group of a hydroxy group, a cyano group, or a carboxy group, the ratio of the constituent unit derived from the monomer represented by the formula (A4), (A6), or (A7) to all the constituent units contained in the polymer may be 100%.

An amount of the resin (A) contained in the sacrificial layer-forming composition is not particularly limited as long as the object of the present invention is not impaired and is appropriately determined in consideration of the coating properties, etc. of the sacrificial layer-forming composition. Typically, an amount of the resin (A) in the sacrificial layer-forming composition preferably meets the following relationship between an amount of the resin (A) and an amount of the solvent (C), which is described below, in the sacrificial layer-forming composition. When the mass of the resin (A) in the sacrificial layer-forming composition is 100 parts by mass, an amount of the solvent (C) is preferably 100 parts by mass or more and 10,000 parts by mass or less, more preferably 500 parts by mass or more and 8,000 parts by mass or less, and particularly preferably 1,000 parts by mass or more and 6,000 parts by mass or less.

### <Polyol (B)>

The sacrificial layer-forming composition includes a polyol (B). The polyol (B) functions as a plasticizer. Examples of the polyol (B) include ethylene glycol, diethylene glycol, triethylene glycol, tetraethylene glycol, dipropylene glycol, tripropylene glycol, tetrapropylene glycol, polypropylene glycol, butylene glycol, trimethylolpropane, trimethylolethane, ditrimethylolpropane, polytrimethylolpropane, pentaerythritol, dipentaerythritol, polypentaerythritol, sorbitol, mannitol, arabitol, xylitol, galactitol, glycerin, diglycerin, triglycerin, polyglycerin, 1,3-butanediol, 1,4-butanediol, polybutylene glycol, 3-methyl-1,5-pentadiol, 1,6-hexanediol, 1,4-cyclohexanedimethanol, 1,9-nonanediol, 1,2-dodecanediol, 2-phenyl-1,2-propanediol, 1,4-benzenedimethanol, and neopentyl glycol.

The content of the polyol (B) in the sacrificial layer-forming composition is not particularly limited. The content of the polyol (B) in the sacrificial layer-forming composition is preferably 10 parts by mass or more and 70 parts by mass or less, more preferably 20 parts by mass or more and 60 parts by mass or less, and particularly preferably 30 parts by mass or more and 50 parts by mass or less with respect to 100 parts by mass of the resin (A).

<Solvent (C)>

The solvent (C) is not particularly limited as long as it is a solvent in which the resin (A) and the polyol (B) are soluble. If predetermined amounts of the resin (A) and the polyol (B) are dissolved in the sacrificial layer-forming composition, the sacrificial layer-forming composition may contain the resin (A) and the polyol (B) in an undissolved state. The resin (A) and the polyol (B) are preferably completely dissolved in the sacrificial layer-forming composition.

The solvent (C) may be any of water, an organic solvent, or an aqueous solution of an organic solvent but is preferably water.

Examples of the organic solvent used as the solvent (C) include:
sulfoxides such as dimethylsulfoxide;
sulfones such as dimethylsulfone, diethylsulfone, bis(2-hydroxyethyl)sulfone and tetramethylenesulfone;
amides such as N,N-dimethylformamide, N-methylformamide, N,N-dimethylacetamide, N-methylacetamide, and N,N-diethylacetamide;
lactams such as N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone;
imidazolidinones such as 1,3-dimethyl-2-imidazolidinone, 1,3-diethyl-2-imidazolidinone and 1,3-diisopropyl-2-imidazolidinone;
dialkyl glycol ethers such as dimethyl glycol, dimethyl diglycol, dimethyl triglycol, methyl ethyl diglycol, diethyl glycol, and triethylene glycol butyl methyl ether; (poly)alkylene glycol monoalkyl ethers such as ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether;
(poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate;
other ethers such as dimethyl ether, diethyl ether, methyl ethyl ether, dipropyl ether, diisopropyl ether, dibutyl ether, diisoamyl ether, diethylene glycol dimethyl ether, diethylene glycol methyl ethyl ether, diethylene glycol diethyl ether, and tetrahydrofuran;
ketones such as methyl ethyl ketone, cyclohexanone, 2-heptanone, and 3-heptanone;
alkyl lactates such as methyl 2-hydroxypropionate, and ethyl 2-hydroxypropionate;
other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methyl-3-methoxybutyl acetate, 3-methyl-3-methoxybutyl propionate, ethyl acetate, n-propyl acetate, i-propyl acetate, n-butyl acetate, i-butyl acetate, n-pentyl formate, i-pentyl acetate, n-butyl propionate, ethyl butyrate, n-propyl butyrate, i-propyl butyrate, n-butyl butyrate, methyl pyruvate, ethyl pyruvate, n-propyl pyruvate, methyl acetoacetate, ethyl acetoacetate, and ethyl 2-oxobutanoate; lactones such as β-propyrolactone, γ-butyrolactone, and δ-pentyrolactone;
linear, branched, or cyclic aliphatic hydrocarbons such as n-hexane, n-heptane, n-octane, n-nonane, methyloctane, n-decane, n-undecane, n-dodecane, 2,2,4,6,6-pentamethylheptane, 2,2,4,4,6,8,8-heptamethylnonane, cyclohexane and methylcyclohexane;
aromatic hydrocarbons such as benzene, toluene, xylene, 1,3,5-trimethylbenzene, and naphthalene; and
terpenes such as p-menthane, diphenylmenthane, limonene, terpinene, bornane, norbornane, and pinane.

When the solvent (C) is a mixed solvent of water and an organic solvent, the content of the organic solvent in the solvent (C) is preferably 10% by mass or more, and more preferably 20% by mass or more.

### <Other Components>

The sacrificial layer-forming composition may contain various components other than the resin (A), the polyol (B), and the solvent (C) as long as the object of the present invention is not impaired. Examples of the other components include a viscosity modifier and a surfactant. The sacrificial layer-forming composition may contain an antifoaming agent but may not contain an antifoaming agent, because the sacrificial layer-forming composition including the resin (A) can suppress foaming.

### <Method for preparing Sacrificial layer-Forming Composition>

The method for preparing the sacrificial layer-forming composition is not particularly limited. The sacrificial layer-forming composition is typically prepared by uniformly mixing predetermined amounts of the resin (A), the polyol (B), the solvent (C), and other components as necessary.

Examples of the support 1 on which the sacrificial layer 2 is formed using such a sacrificial layer-forming composition include a resin film such as a PET (polyethylene terephthalate) film and a substrate such as a silicon substrate or a glass substrate. In the support 1, the surface on which the sacrificial layer 2 is formed may or may not be treated with a release agent. The shape of the support 1 is not particularly limited and may be in the form of a film or a plate. When the support is a film-like shape, a film drawn from a film roll can be used as the support 1.

The method of forming the sacrificial layer 2 on the support 1 using the sacrificial layer-forming composition is not particularly limited, and examples thereof include coating methods such as a slit die coating method, a gravure coating method, a spin coating method, a spray method, a roller coating method, and a dipping method. Among them, a slit die coating method using a slit die is preferable.

After the sacrificial layer-forming composition is applied to the support 1, the coating film may be heated (dried) as necessary to remove at least some of the solvent (C) of the sacrificial layer-forming composition. The heating (drying) temperature of the coating film is, for example, 50°C or more and 90°C or less. The coating film may be heated at a low temperature (for example, 50°C or more and less than 70°C) and then at a high temperature (for example, 70°C or more and 90°C or less).

The film thickness (thickness) of the sacrificial layer 2 is not particularly limited but is preferably 1 µm or more and 20 µm or less, more preferably 3 µm or more and 18 µm or less, and still more preferably 5 µm or more and 15 µm or less. The sacrificial layer 2 formed using the sacrificial layer-forming composition described above has self-supporting properties and excellent handling properties even though it is thin.

### [Membrane Forming Step]

In the membrane forming step, at least one membrane 3 is formed on the sacrificial layer 2 (FIG. 1B). Although FIG. 1B shows an embodiment where a membrane is formed as the membrane 3, two or more membranes may be formed as the membrane 3.

The material of the membrane 3 is preferably a polymer. Examples of suitable polymers include silicon-containing resins such as silicone resins, polyamic acids, polyimides, polyamides, polybenzoxazoles, polyethylene oxides, epoxy resins, and acrylic resins, as well as copolymers thereof. The polymers may be elastomers. Further, the examples also include styrene-based polymers such as an isoprene-butadiene-styrene copolymer, a hydrogenation product of an isoprene-butadiene-styrene copolymer, a butadiene-styrene copolymer, a hydrogenation product of a butadiene-styrene copolymer, an isoprene-styrene copolymer, a hydrogenation product of an isoprene-styrene copolymer, an ethylene-propylene-styrene copolymer, a propylene-styrene copolymer, an ethylene-styrene copolymer, an ethylene-propylene-1-butene-styrene copolymer, and polystyrene. The examples also include cyclic olefin-based copolymers such as an ethylene-norbornene copolymer, a propylene-norbornene copolymer, an ethylene-tetracyclododecene copolymer, a propylene-tetracyclododecene copolymer, an ethylene-propylene-norbornene copolymer, and an ethylene-propylene-tetracyclododecene copolymer. When the polymer is a copolymer, the polymer may be a random copolymer or a block copolymer. When the polymer is a block copolymer that contains a styrene-derived unit, a block copolymer having blocks of styrene-derived units at both ends of the molecular chain is preferable. Further, the polymer may have a hydroxy group either at both ends or one end of the molecular chain.

When the membrane 3 is a CO₂ separation membrane, the material of the membrane 3 is preferably a silicon-containing resin such as a silicone resin. As the silicone resin (resin having a siloxane bond as a main skeleton), polyorganosiloxanes such as polydimethylsiloxane, polyphenylmethylsiloxane, and polydiphenylsiloxane are preferable, and polydimethylsiloxane is more preferable. A polyorganosiloxane may be used together with a curing agent for the polyorganosiloxane.

The method of forming the membrane 3 on the sacrificial layer 2 is not particularly limited and examples thereof include a method of applying a membrane-forming composition containing raw materials for the membrane 3 and a solvent by a slit die coating method, a gravure coating method, a spin coating method, a spray method, a roller coating method, an immersion method, or the like. To form a large membrane 3, a gravure coating method such as microgravure coating using a gravure roll is preferable.

Examples of the solvent contained in the membrane-forming composition include sulfoxides, sulfones, amides, lactams, imidazolidinones, dialkyl glycol ethers, (poly)alkylene glycol monoalkyl ethers, (poly)alkylene glycol monoalkyl ether acetates, other ethers, ketones, other esters, lactones, linear, branched, or cyclic aliphatic hydrocarbons, aromatic hydrocarbons, and terpenes. Examples of the sulfoxides include dimethyl sulfoxide. Examples of the sulfones include dimethylsulfone, diethylsulfone, bis(2-hydroxyethyl)sulfone, and tetramethylenesulfone. Examples of the amides include N,N-dimethylformamide, N-methylformamide, N,N-dimethylacetamide, N-methylacetamide, and N,N-diethylacetamide. Examples of the lactams include N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone. Examples of the imidazolidinones include 1,3-dimethyl-2-imidazolidinone, 1,3-diethyl-2-imidazolidinone, and 1,3-diisopropyl-2-imidazolidinone. Examples of the dialkyl glycol ethers include dimethyl glycol, dimethyl diglycol, dimethyl triglycol, methyl ethyl diglycol, diethyl glycol, and triethylene glycol butyl methyl ether. Examples of the (poly)alkylene glycol monoalkyl ethers include ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether. Examples of the (poly)alkylene glycol monoalkyl ether acetates include ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, propylene glycol monomethyl ether acetate, and propylene glycol monoethyl ether acetate. Examples of the other ethers include dimethyl ether, diethyl ether, methyl ethyl ether, dipropyl ether, diisopropyl ether, dibutyl ether, diisoamyl ether, diethylene glycol dimethyl ether, diethylene glycol methyl ethyl ether, diethylene glycol monobutyl ether, diethylene glycol diethyl ether, tetraethylene glycol dimethyl ether, and tetrahydrofuran. Examples of the ketones include methyl ethyl ketone, cyclohexanone, 2-heptanone, 3-heptanone, and 2,6-dimethyl-4-heptanone. Examples of the other esters include alkyl lactates such as methyl lactate and ethyl lactate; ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methoxybutyl acetate, 3-methyl-3-methoxy-1-butyl acetate, 3-methyl-3-methoxybutyl propionate, ethyl acetate, n-propyl acetate, isopropyl acetate, n-butyl acetate, isobutyl acetate, n-pentyl acetate, n-hexyl acetate, n-heptyl acetate, n-octyl acetate, n-pentyl formate, isopentyl acetate, n-butyl propionate, ethyl butyrate, n-propyl butyrate, isopropyl butyrate, butyl butyrate, methyl n-octanoate, methyl decanoate, methyl pyruvate, ethyl pyruvate, n-propyl pyruvate, methyl acetoacetate, ethyl acetoacetate, ethyl 2-oxobutanoate, dimethyl adipate, and propylene glycol diacetate. Examples of the lactones include propyrolactone, γ-butyrolactone, and 6-pentyrolactone. Examples of the linear, branched, or cyclic aliphatic hydrocarbons include n-hexane, n-heptane, n-octane, n-nonane, methyloctane, n-decane, n-undecane, n-dodecane, 2,2,4,6,6-pentamethylheptane, 2,2,4,4,6,8,8-heptamethylnonane, cyclohexane, and methylcyclohexane. Examples of the aromatic hydrocarbons include benzene, toluene, benzotrifluoride, xylene, 1,3,5-trimethylbenzene, naphthalene, and decahydronaphthalene. Examples of the terpenes include p-menthane, diphenylmenthane, limonene, terpinene, bornane, norbornane, and pinane.

The method of preparing the membrane-forming composition is not particularly limited. The membrane-forming composition is typically prepared by uniformly mixing raw materials for the membrane 3, a solvent, and another component as necessary.

After the membrane-forming composition is applied onto the sacrificial layer 2, the applied membrane may be heated (dried) as necessary to remove at least some of the solvent of the membrane-forming composition. The heating (drying) temperature of the coating membrane is, for example, 50°C or more and 160°C or less. Alternatively, the coating membrane may be heated at a low temperature (for example, 50°C or more and lower than 100°C) and then at a high temperature (for example, 100°C or more and 160°C or less). Heating at elevated temperatures may cure (crosslink) a silicone resin such as polydimethylsiloxane.

The membrane thickness (thickness) of the membrane 3 is not particularly limited but is preferably 10 nm or more and 3,000 nm or less, more preferably 50 nm or more and 1,000 nm or less, and still more preferably 100 nm or more and 500 nm or less.

### [Bonding Step]

In the bonding step, a support base material 4 is bonded to at least one membrane 3 (FIG. 1C). When the membrane 3 is, for example, thin or large, the membrane 3 is difficult to stand by itself and is likely to deform or break. By bonding the support base material 4 that supports (reinforces) the membrane 3 to the membrane 3, deformation and breakage can be suppressed, and for example, functions such as separation performance of the membrane 3 can be maintained.

The material of the support base material 4 may be an organic material or an inorganic material and is preferably an organic material. Such an organic material is typically a resin. Examples of the resin include polyacetals, polyamides, polycarbonates, polyesters (polybutylene terephthalate, polyethylene terephthalate, polyarylate etc.), FR-AS resins, FR-ABS resins, AS resins, ABS resins, polyphenylene oxides, polyphenylene sulfides, polysulfones, polyether sulfones, polyether ether ketones, fluorine-based resins (polytetrafluoroethylene, polyvinylidene fluoride, etc.), polyimides, polyamideimides, polyamide bismaleimides, polyetherimide, polybenzoxazoles, polybenzothiazoles, polybenzimidazoles, silicone resins, BT resins, polymethylpentene, ultrahigh molecular weight polyethylenes, FR-polypropylenes, (meth)acrylic resins (such as polymethyl methascrylate), and polystyrene. Among the resins, polyvinylidene fluoride, polyether sulfones, polyimides, and polyamideimides are preferable because thermally or chemically stable films having excellent mechanical strengths can be easily obtained. As the material of the film, a mixture of two or more types of resins may be used. The support base material 4 may be a porous body. When the membrane 3 is a gas separation membrane such as a CO₂ separation membrane, the support base material 4 is preferably a porous body through which gas can transmit. The shape of the support base material 4 is not particularly limited and may be in the form of a film or a plate. When the support base material is a film-like shape, a film drawn from a film roll can be used as the support base material 4.

The thickness of the support base material 4 is not particularly limited but is preferably 1 µm or more and 100 µm or less, more preferably 10 µm or more and 80 µm or less, and still more preferably 20 µm or more and 60 µm or less.

The method of bonding the support base material 4 onto the membrane 3 is not particularly limited. Examples thereof include lamination and a transfer method using intermolecular force. For example, the membrane 3 may be laminated (thermocompression bonded) to the support base material 4 using a roll 11, etc. at a pressure at which the support base material 4 is not broken. Under the conditions of the thermocompression bonding, the pressure of the roller is preferably 0.1 kgf/cm² or more and 10 kgf/cm² or less, and more preferably 0.2 kgf/cm² or more and 5 kgf/cm² or less. The temperature of the roller is preferably 20°C or more and 120°C or less, and more preferably 25°C or more and 100°C or less. When the intermolecular force is used, for example, the membrane 3 and the support base material 4 may be brought into contact with each other by a roller.

### [Peeling Step]

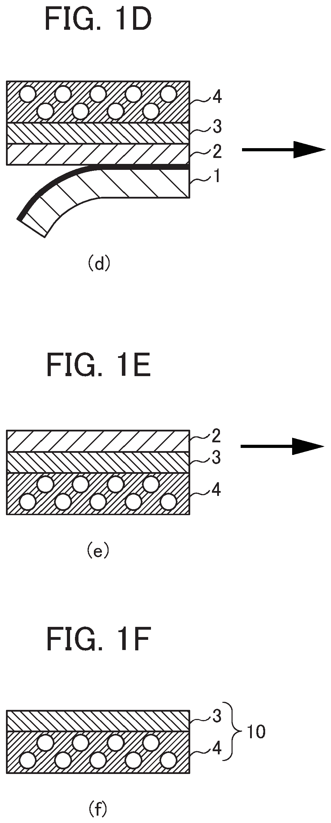

In the peeling step, the support 1 is peeled after the bonding step (FIG. 1D). The method of peeling the support 1 from the sacrificial layer 2 is not particularly limited. A method of peeling the support 1 from the sacrificial layer 2 without using a peeling liquid, etc. is exemplified. For example, when the support 1 is in the form of a film, the support 1 can be peeled from the sacrificial layer 2 by unwinding the film. When peeling the support 1 from the sacrificial layer 2, a part of the sacrificial layer 2 may be peeled together with the support 1.

### [Sacrificial layer Removal Step]

In the sacrificial layer removal step, after the peeling step, the sacrificial layer 2 is removed by dissolving the sacrificial layer 2 in a liquid (FIG. 1E). Thus, a laminate 10 in which the membrane 3 and the support base material 4 are laminated can be produced (FIG. 1F). The laminate 10 may be dried by air flow or a dryer, as necessary.

The liquid for dissolving the sacrificial layer 2 may be water, an organic solvent, or a mixed solvent of water and an organic solvent but is preferably water. Here, when removing a sacrificial layer containing a resin by dissolving it in a liquid, there is a problem that at least a part of the sacrificial layer is not dissolved in the liquid and tends to remain. In order to remove the remaining sacrificial layer, it is necessary to further dissolve the sacrificial layer using, for example, an aqueous alkali solution (basic aqueous solution). However, by forming the sacrificial layer 2 using the sacrificial layer-forming composition described above, the sacrificial layer 2 is easily removed using a liquid such as water without using, for example, an alkali, etc., because the resin (A) and the polyol (B) contained in the sacrificial layer-forming composition are easily dissolved in the liquid such as water at room temperature (for example, 25°C). It is also possible to remove the sacrificial layer 2 with water alone. Therefore, for example, the laminate 10 in which the sacrificial layer 2 has been removed can be produced without the step of dissolving the sacrificial layer 2 in an aqueous alkali solution.

The method of dissolving the sacrificial layer 2 in a liquid is not particularly limited and examples thereof include a method of immersing the sacrificial layer 2 in a liquid such as water and a method of spraying the sacrificial layer 2 with a liquid such as water ejected from a shower. The immersion time of the sacrificial layer 2 in the liquid is not particularly limited but is, for example, 5 minutes or more and 120 minutes or less. The time for spraying the sacrificial layer 2 with the liquid is not particularly limited but is, for example, 2 minutes or more and 5 minutes or less. The temperature of the liquid is not particularly limited but may be, for example, 10°C or more and 40°C or less, or 20°C or more and 30°C or less.

### <<CO₂ Separation Method>>

The CO₂ separation method includes: a laminate production step of producing a laminate in which a CO₂ separation membrane and a support base material are laminated by the above-described laminate production method; and a separation step of separating CO₂ from a gas containing CO₂ by supplying the gas to the laminate. By separating and recovering CO₂ by such a CO₂ separation method, global warming due to CO₂ can be suppressed. The recovered CO₂ can be used as a carbon resource.

### EXAMPLES

Hereinafter, the present invention will be described in more detail with reference to Examples, but the present invention is not limited to these Examples.

### [Examples 1 to 8 and Comparative Examples 1 to 16]

### <Preparation of Sacrificial layer-Forming Compositions 1 and 2>

100 parts by mass of the following resin A1 (resin (A)), 40 parts by mass of trimethylolpropane (polyol (B)), and 1,900 parts by mass of water (solvent (C)) were uniformly mixed to prepare a sacrificial layer-forming composition 1. In the structural formula below, the number at the lower right of the parentheses in each constituent unit represents a content (mol%) of the constituent unit in the resin. In the structural formula below, the constituent unit on the left side of the resin A1 is a constituent unit for introducing the functional group II which is a hydrophilic group, into the resin (A). The constituent unit on the right side of the resin A1 is a constituent unit for introducing the functional group I into the resin (A).

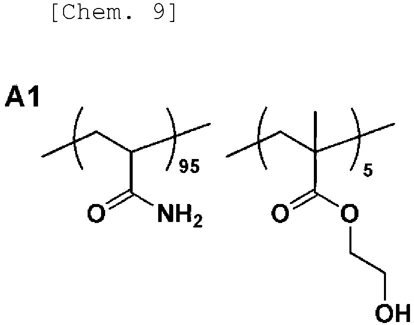

In addition, 200 parts by mass of resin A2, polyvinyl alcohol, and 1,900 parts by mass of water were uniformly mixed to prepare a sacrificial layer-forming composition 2.

<Preparation of Membrane-Forming Compositions 1 to 4>

The following D1 (polyimide (U-Varnish A) manufactured by Ube Corporation) was dissolved in a mixed solvent of N-methyl-2-pyrrolidone (NMP) and propylene glycol monomethyl ether (PGME) (mass ratio 1:1) to a concentration of 5% by mass to prepare a membrane-forming composition 1. The following D2 (polyamide-polyethylene oxide block copolymer (Pebax MH1657, manufactured by Arkema)) was dissolved in benzyl alcohol to a concentration of 5% by mass to prepare a membrane-forming composition 2. The following D3 (styrene-olefin block copolymer (Tuftec H1051, manufactured by Asahi Kasei)) was dissolved in decahydronaphthalene to a concentration of 5% by mass to prepare a membrane-forming composition 3. D4 (polydimethylsiloxane (SYLGARD (registered trademark) 184, manufactured by Dow Corning)) was dissolved in heptane to a concentration of 5% by mass to prepare a membrane-forming composition 4.

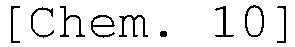

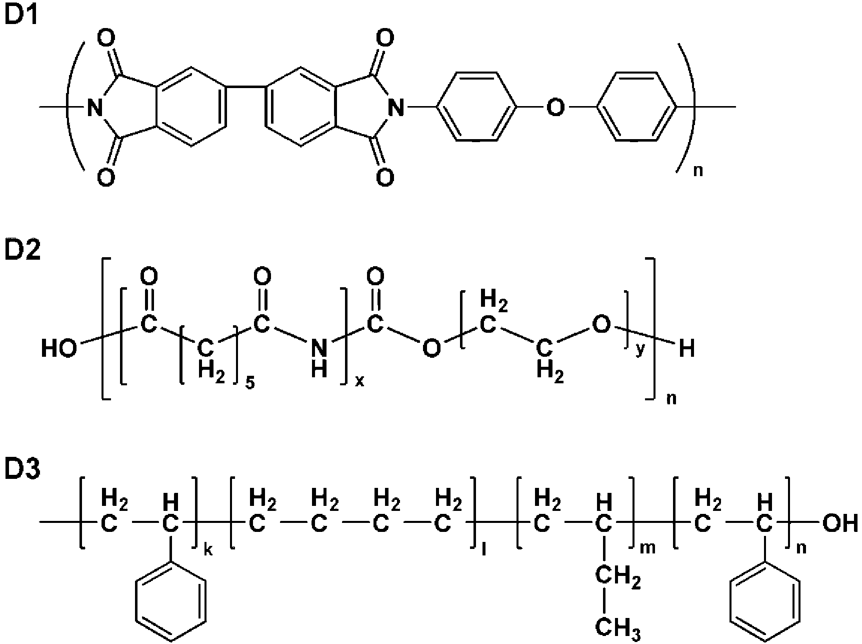

### <Production of Laminates>

Using the thus-obtained sacrificial layer-forming compositions 1 and 2 and the membrane-forming compositions 1 to 4, a PET film as the support 1, and a porous polyimide film as the support base material 4, the laminate 10 was produced by the method shown in FIGs. 1A to 1F. Specifically, first, each of the sacrificial layer-forming compositions described in Table 1 was applied to a support (PET film) 1 by a slit die coating method, followed by heating at 60°C for 2 minutes, and then at 80°C for 3 minutes to form a sacrificial layer 2 having a film thickness of 10 µm (sacrificial layer forming step).

Next, each of the membrane-forming compositions described in Table 1 was applied onto the sacrificial layer 2 by a gravure coating method (Microgravure (registered trademark)), followed by heating at 60°C for 5 minutes and then at 140°C for 10 minutes to form a membrane (CO₂ separation membrane) 3 having a membrane thickness of 500 nm (membrane forming step).

Next, a support base material (porous polyimide film) 4 was placed on the membrane (CO₂ separation membrane) 3, and the support base material 4 was adhesion bonded onto the membrane 3 by lamination (thermal compression bonding) under the conditions of roller pressure: 3 kgf/cm², roller temperature: 80°C, and transportation speed: 0.6 m/min (bonding step).

After the bonding step, the support (PET film) 1 was unwound at a transportation speed of 0.6 m/min to peel the support 1 from the sacrificial layer 2 (peeling step).

After the peeling step, one of the sacrificial layer removing methods described in Table 1 was performed at room temperature (25°C) (sacrificial layer removal step). Specifically, either an operation of immersing the sacrificial layer 2 in pure water for 60 minutes (described as "water immersion" in Table 1) or an operation of spraying pure water ejected from a shower to the sacrificial layer 2 for 5 minutes (described as "water shower" in Table 1) was carried out.

In Comparative Examples 9 to 16, after the sacrificial layer removal step, alkali treatment was also performed by immersing the remaining sacrificial layer 2 in an aqueous alkali solution (1% by mass aqueous sodium hydroxide solution) at room temperature (25°C) to dissolve it.

Thereafter, air drying and drying by a dryer (60°C) were performed to obtain the laminate 10, in which the membrane 3 and the support base material 4 were laminated.

### <Laminate Evaluation (CO₂ Separation)>

With respect to the thus-obtained laminate 10, CO₂ transmittance was measured according to JIS K7126-2:2006, Plastics - Film and Sheeting - Gas Transmittance Test Method - Part 1: Equal Pressure Method, under the following conditions. Measurement device: differential pressure type gas/vapor transmittance measurement device [GTR-10XF]
Detector: gas chromatography [thermal conductivity detector (TCD)]
   Test conditions: mixed gas of 5% CO₂ and 95% N₂. Gas pressure was 3.8 cmHg for CO₂ and 72.2 cmHg for N₂ at a temperature of 25°C and a humidity of 0% RH.
Transmission area: 0.159 cm²
   The ratios (CO₂/N₂) of N₂ and CO₂ transmittances measured were evaluated according to the following criteria and the results are shown in Table 1.
Possible: CO₂/N₂ was 9 to 11.
   Not possible: CO₂/N₂ was less than 9 or greater than 11.

**[Table 1]**

| | Sacrificial layer forming step | | Membrane forming step | Sacrificial layer removal step | Alkali treatment | CO₂ separation |
|---|---|---|---|---|---|---|
| | Sacrificial layer-forming composition | Resin | Membrane-forming composition | Sacrificial layer removal method | | |
| Example 1 | 1 | A1 | 1 | Water immersion | No | Possible |
| Example 2 | 1 | A1 | 2 | Water immersion | No | Possible |
| Example 3 | 1 | A1 | 3 | Water immersion | No | Possible |
| Example 4 | 1 | A1 | 4 | Water immersion | No | Possible |
| Example 5 | 1 | A1 | 1 | Water shower | No | Possible |
| Example 6 | 1 | A1 | 2 | Water shower | No | Possible |
| Example 7 | 1 | A1 | 3 | Water shower | No | Possible |
| Example 8 | 1 | A1 | 4 | Water shower | No | Possible |
| Comparative Example 1 | 2 | A2 | 1 | Water immersion | No | Not possible |
| Comparative Example 2 | 2 | A2 | 2 | Water immersion | No | Not possible |
| Comparative Example 3 | 2 | A2 | 3 | Water immersion | No | Not possible |
| Comparative Example 4 | 2 | A2 | 4 | Water immersion | No | Not possible |
| Comparative Example 5 | 2 | A2 | 1 | Water shower | No | Not possible |
| Comparative Example 6 | 2 | A2 | 2 | Water shower | No | Not possible |
| Comparative Example 7 | 2 | A2 | 3 | Water shower | No | Not possible |
| Comparative Example 8 | 2 | A2 | 4 | Water shower | No | Not possible |
| Comparative Example 9 | 2 | A2 | 1 | Water immersion | Yes | Not possible |
| Comparative Example 10 | 2 | A2 | 2 | Water immersion | Yes | Not possible |
| Comparative Example 11 | 2 | A2 | 3 | Water immersion | Yes | Not possible |
| Comparative Example 12 | 2 | A2 | 4 | Water immersion | Yes | Not possible |
| Comparative Example 13 | 2 | A2 | 1 | Water shower | Yes | Possible |
| Comparative Example 14 | 2 | A2 | 2 | Water shower | Yes | Possible |
| Comparative Example 15 | 2 | A2 | 3 | Water shower | Yes | Possible |
| Comparative Example 16 | 2 | A2 | 4 | Water shower | Yes | Possible |

According to Examples 1 to 8, where the laminate 10 was produced by the above-described production method including the sacrificial layer forming step, the membrane forming step, the bonding step, the peeling step, and the sacrificial layer removal step, using the sacrificial layer-forming composition including the resin (A) having a predetermined functional group, the polyol (B), and the solvent (C), it was found that the sacrificial layer could be easily removed with water and the resulting membrane could be favorably used as the CO₂ separation membrane.

On the other hand, in Comparative Examples 1 to 16 in which the sacrificial layer-forming composition that did not contain the resin (A) having the predetermined functional group was used, the sacrificial layer could not be easily removed with water, and as shown in Comparative Examples 13 to 16, it was found that alkali treatment was necessary after the sacrificial layer removal step of spraying water to remove the sacrificial layer, in order for the resulting membrane to be favorably used as the CO₂ separation membrane.

### EXPLANATION OF REFERENCE NUMERALS

- 1: Support
- 2: Sacrificial layer
- 3: Membrane
- 4: Support base material
- 10: Laminate
- 11: Roll

## Claims

1. A method for producing a laminate in which at least one membrane and a support base material are laminated, the method comprising:
forming a sacrificial layer on a support using a sacrificial layer-forming composition;
forming at least one membrane on the sacrificial layer;
bonding a support base material on the at least one membrane;
peeling the support after the bonding; and
removing the sacrificial layer by dissolving the sacrificial layer in a liquid after the peeling,
wherein the sacrificial layer-forming composition comprises a resin (A), a polyol (B), and a solvent (C), and
the resin (A) has a functional group I which is one or more groups selected from the group consisting of a hydroxy group, a cyano group, and a carboxy group, and a functional group II which is a hydrophilic or hydrophobic group other than the functional group I,
provided that when the functional group II comprises one or more groups selected from a hydroxy group, a cyano group, and a carboxy group, the resin (A) may not have the functional group I.

2. The method for producing a laminate according to claim 1, wherein the functional group II is a hydrophilic group and is a group represented by the following formula (A1):
-NH-R¹ (A1):
wherein R¹ represents an alkyl group having 1 or more and 4 or less carbon atoms substituted with one or more groups selected from the group consisting of an amino group, a sulfonic acid group, and a hydroxy group, or a hydrogen atom, or
a quaternary ammonium base represented by the following formula (A2):
-N⁺R²R³R⁴·Z⁻ (A2):
wherein R², R³, and R⁴ each independently represent a hydrogen atom or a hydrocarbon group having 1 to 6 carbon atoms, and Z⁻represents a counter anion.

3. The method for producing a laminate according to claim 2, wherein the resin (A) is a water-soluble resin having a constituent unit derived from at least one monomer selected from the group consisting of (meth)acrylamide and a (meth)acrylamide derivative.

4. The method for producing a laminate according to claim 1, wherein the functional group I is a group derived from a monomer represented by the following formula (A3):
CH₂=CR⁵-(R⁶)ₐ-CO-R⁷ (A3):
wherein R⁵ is a hydrogen atom or a methyl group, R⁶ is a divalent hydrocarbon group, a is 0 or 1, R⁷ is -OH, -O-R⁸, or - NH-R⁸, and R⁸ is a hydrocarbon group substituted with one or more functional groups selected from the group consisting of a hydroxy group, a cyano group, and a carboxy group.

5. The method for producing a laminate according to claim 1, wherein the liquid is water.

6. The method for producing a laminate according to claim 1, wherein the sacrificial layer has a film thickness of 1 µm or more and 20 µm or less.

7. The method for producing a laminate according to claim 1, wherein the at least one membrane has a film thickness of 100 nm or more and 1,000 nm or less.

8. The method for producing a laminate according to claim 1, wherein the method does not include dissolving the sacrificial layer in an aqueous alkali solution.

9. The method for producing a laminate according to claim 1, wherein the at least one membrane is a CO₂ separation membrane.

10. A CO₂ separation method comprising: producing a laminate by the method for producing a laminate according to claim 9; and
separating CO₂ from a gas comprising CO₂ by supplying the gas to the laminate.
